# FASCICULE DE BREVET EUROPEEN

(11) **EP 0 911 953 B1**
(45) Date de publication et mention de la délivrance du brevet: **07.05.2003**
(21) Numéro de dépôt: 98402625.2
(22) Date de dépôt: 22.10.1998
(51) Int. Cl.: H02P 1/04, F02N 11/08

(54) **Dispositif pour la commande d'un démarreur de véhicule automobile**
Regelvorrichtung für den Anlasser eines Kraftfahrzeuges
Control device for a vehicle starter

(30) Priorité: 24.10.1997 FR 9713351
(43) Date de publication de la demande: 28.04.1999
(73) Titulaire: VALEO EQUIPEMENTS ELECTRIQUES MOTEUR, 94000 Créteil (FR)
(72) Inventeur: Vilou, Gérard, 69160 Tassin (FR)
(74) Mandataire: Le Forestier, Eric

(56) Documents cités:
- EP-A- 0 526 307
- DE-A- 3 233 596
- DE-A- 4 338 638
- DE-C- 4 106 247
- DE-U- 9 319 621
- GB-A- 2 239 569

## Description

La présente invention est relative aux dispositifs pour la commande d'un démarreur de véhicule automobile. Un dispositif comportant les caractéristiques du préambule de la revendication 1 est connu du document GB-A-2 239 569.

Des dispositifs pour la commande électronique d'un démarreur sont désormais classiquement connus. Ils comportent habituellement une unité de gestion qui reçoit en entrée une information sur l'état ouvert ou fermé de l'interrupteur de démarrage - lequel est généralement actionné par une clé de contact - et commande l'alimentation du ou des bobinages d'un contacteur de puissance qui, lorsqu'il est fermé, assure l'alimentation du moteur électrique du démarreur. Ce contacteur de puissance comporte notamment un noyau mobile qui, en fin de course, ferme le circuit d'alimentation du moteur électrique du démarreur et dont le déplacement entraîne l'engagement du pignon de démarreur vers la couronne de démarrage. Cette unité de gestion sert également à gérer d'autres fonctions, comme l'arrêt automatique du démarreur ou encore les protections contre les surintensités ou contre les fausses manoeuvres, telles qu'une demande de démarrage alors que le moteur thermique est déjà en fonctionnement. Cette unité de gestion est soit intégrée au démarreur lui-même, soit logée hors du démarreur dans un boîtier spécial. En variante encore, elle peut être constituée par un système électronique déjà existant tel que le calculateur d'injection et d'allumage.

Il arrive, notamment dans le cas d'une avarie quelconque sur le véhicule, que l'utilisateur fasse de multiples tentatives de démarrage successives dans l'espoir de faire démarrer le moteur.

A chaque activation, le démarreur s'échauffe rapidement et sa température augmente sensiblement - quelques degrés - en fonction des caractéristiques de fonctionnement et de la durée d'activation du démarreur. Le temps de repos entre deux tentatives de démarrage successives est de l'ordre de quelques secondes et permet un refroidissement partiel. Toutefois, cette vitesse de refroidissement est très nettement plus faible que la vitesse d'échauffement, de sorte que généralement le démarreur est loin d'avoir retrouvé sa température initiale au moment d'une nouvelle réactivation.

On obtient alors un effet cumulatif d'échauffement qui se traduit, si le nombre et la durée des activations sont trop élevés, par une destruction du démarreur.

Or, il s'avère impossible de protéger le démarreur contre une telle destruction en imposant des temps suffisamment longs entre deux fermetures du contacteur de puissance successives : la coupure de l'alimentation de l'unité de gestion - laquelle est généralement constituée par un microprocesseur - entre deux actionnements successifs de l'interrupteur de contact empêche en effet une mesure de temps par l'horloge interne de ladite unité de gestion.

Un but de l'invention est donc de proposer un dispositif pour la commande électronique d'un démarreur de véhicule automobile qui soit protégé contre des détériorations, notamment d'origine thermique, que pourraient occasionner des actionnements successifs trop rapprochés de l'interrupteur de démarrage.

A cet effet, l'invention propose un dispositif pour la commande d'un démarreur de véhicule automobile comportant des moyens pour commander l'alimentation du moteur électrique du démarreur en fonction notamment de l'état ouvert ou fermé d'un interrupteur de démarrage, ces moyens comportant un circuit de type RC ainsi que des moyens de commande qui empêchent l'alimentation du moteur lorsque la valeur de la tension aux bornes des moyens capacitifs du circuit (4) RC est supérieure à un seuil donné
caractérisé en ce que
ce circuit de type RC se charge quand l'interrupteur de démarrage est fermé et se décharge quand l'interrupteur de démarrage est ouvert et ne permet la réalimentation du moteur que lorsque la valeur de la tension aux bornes des moyens capacitifs du circuit (4) RC est devenue inférieure à un deuxième seuil, inférieur au premier, ce circuit de type RC présentant une constante de temps de charge plus petite que sa constante de temps de décharge.

Ce dispositif est avantageusement complété par les différentes caractéristiques suivantes prises seules ou selon toutes leurs combinaisons techniquement possibles :
- le circuit RC est constitué de deux branches montées en parallèle, l'une qui comprend en série des premiers moyens résistifs et des moyens capacitifs, l'autre qui comprend des seconds moyens résistifs ;
- les moyens de commande comportent un microprocesseur qui gère l'alimentation du moteur électrique du démarreur en fonction notamment de l'état fermé ou ouvert de l'interrupteur de démarrage et le circuit RC est alimenté en tension par une sortie dudit microprocesseur ;
- le circuit RC est relié à une borne d'alimentation en tension par l'intermédiaire de l'interrupteur de démarrage éventuellement en série avec un circuit régulateur de tension ;
- les moyens de commande comportent un microprocesseur qui gère l'alimentation du moteur électrique du démarreur en fonction notamment de l'état fermé ou ouvert de l'interrupteur de démarrage et une tension correspondant à la tension aux bornes des moyens capacitifs du circuit RC est injectée sur une entrée dudit microprocesseur, ledit microprocesseur commandant le blocage de l'alimentation du moteur électrique lorsque ladite tension est supérieure à un seuil donné ;
- les moyens qui empêchent l'alimentation du moteur lorsque la valeur de la tension aux bornes des moyens capacitifs du circuit RC est supérieure à un seuil donné comportent un circuit analogique à comparateur à seuil ;
- le rapport entre les constantes de temps de charge et de décharge sensiblement égal au rapport entre les constantes de temps d'échauffement et de refroidissement du démarreur ;
- les moyens qui empêchent l'alimentation du moteur lorsque la valeur de la tension aux bornes des moyens capacitifs du circuit RC est supérieure à un seuil donné, n'autorisent à nouveau l'alimentation du moteur électrique que lorsque ladite tension est redescendue au-dessous d'un deuxième seuil inférieur au premier ;
- le seuil de tension au dessus duquel la commande de l'alimentation du moteur M est bloquée est variable en fonction d'un ou plusieurs paramètres de fonctionnement du démarreur et/ou du moteur thermique ;
- les moyens résistifs en série avec les moyens capacitifs du circuit sont variables en fonction de la température.

D'autres caractéristiques et avantages de l'invention ressortiront encore de la description qui suit. Cette description est purement illustrative et non limitative. Elle doit être lue en regard des dessins annexés sur lesquels :
- la figure 1 illustre un dispositif conforme à un mode de réalisation possible de l'invention ;
- les figures 2a à 2c illustrent une séquence de fonctionnement du dispositif de la figure 1.

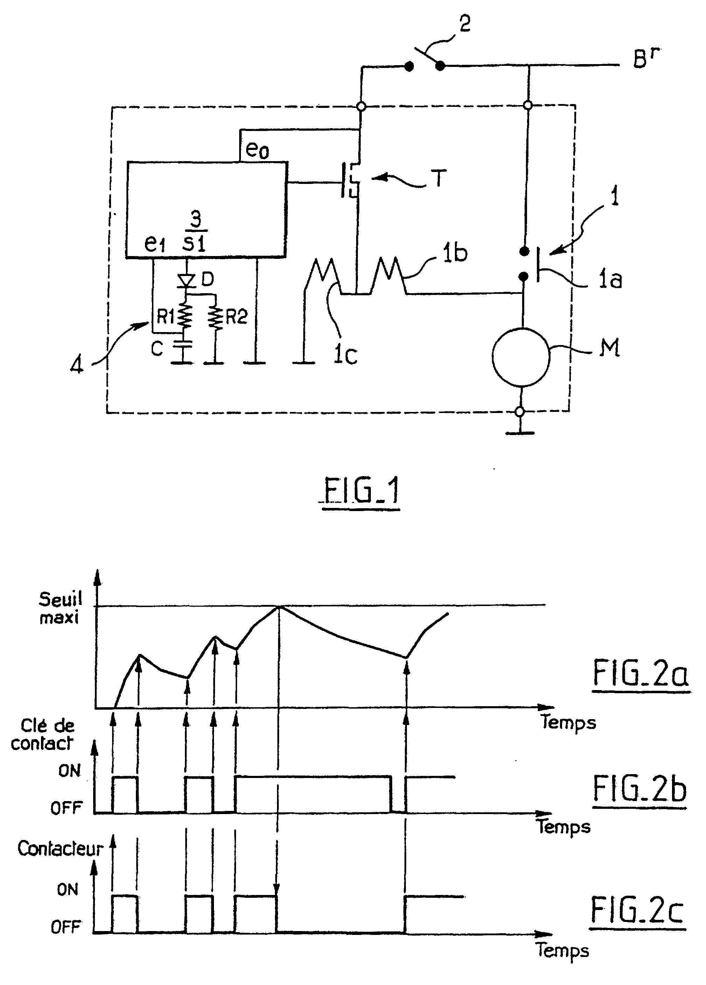

Sur la figure 1, on a représenté un moteur électrique M d'un démarreur de véhicule automobile, ainsi que le contacteur de puissance 1 qui commande l'alimentation de ce moteur M.

Ce moteur électrique M est monté entre la masse et une borne B⁺ à la tension d'alimentation de la batterie.

Le contacteur de puissance 1 est constitué par un relais qui comprend un contact 1a, qui est interposé entre la borne d'alimentation B⁺ et le moteur M, ainsi que des bobinages d'appel et de maintien 1b et 1c.

Une extrémité commune à ces deux bobinages 1b et 1c est reliée à la borne B+ par l'intermédiaire d'un interrupteur commandé (transistor T) en série avec un interrupteur de démarrage du véhicule (interrupteur 2, par exemple actionné par une clé de contact).

Le bobinage d'appel 1b est monté entre ladite extrémité commune et un point entre le contact la et le moteur M.

Le bobinage de maintien 1c est monté entre ladite extrémité commune et la masse.

L'interrupteur T est par exemple un transistor de type MOSFET.

Il est commandé par une unité de gestion 3, qui est un microprocesseur qui génère une tension de commande sur la grille dudit transistor T, de façon à contrôler la séquence d'alimentation des bobinages 1b et 1c en fonction d'une part des différentes phases de fonctionnement du démarreur (alimentation d'appel, maintien de la fermeture du contact, arrêt automatique du démarreur après le démarrage du moteur thermique, etc.) et en fonction d'autre part des différentes protections que ce microprocesseur 3 peut gérer (protection anti-redémarrage lorsque le moteur thermique fonctionne, par exemple).

Pour générer cette tension de commande, cette unité de gestion 3 prend notamment en compte l'état ouvert ou fermé de l'interrupteur 2. A cet effet, ladite unité 2 présente une entrée analogique "e0" sur laquelle est injectée la tension d'un point entre l'interrupteur de démarrage 2 et l'interrupteur commandé T.

Par ailleurs, conformément à l'invention, le dispositif illustré sur la figure 1 comporte des moyens 4 qui empêchent des actionnements successifs trop rapprochés du moteur M.

Ces moyens 4 comportent notamment un circuit de type RC, qui présente une constante de temps de charge plus petite que sa constante de temps de décharge et qui se charge et se décharge selon que l'interrupteur 2 est fermé ou ouvert.

Ils comportent également des moyens qui permettent d'empêcher l'alimentation du moteur M la valeur de la tension aux bornes du condensateur C est supérieure à un seuil donné (ce qui signifie alors que le condensateur ne s'est pas suffisamment déchargé par rapport à la ou aux dernières fermetures de l'interrupteur de démarrage).

Dans l'exemple illustré sur la figure 1, le circuit RC est constitué de deux branches montées en parallèle, l'une qui comprend en série une résistance R1 et un condensateur C, l'autre qui comprend une simple résistance R2.

Ces deux branches sont montées entre la masse et une sortie analogique «s1» du microprocesseur 3, qui met lesdites branches sous tension lorsque les interrupteurs 2 et T sont fermés.

Une diode D qui est passante de ladite sortie si vers la masse est interposée entre ladite sortie « s1 » et lesdites branches R1-C, R2.

La tension aux bornes du condensateur C est injectée sur une entrée analogique « e1 » du microprocesseur 3 et ce dernier commande le blocage de l'interrupteur T lorsqu'à la fermeture de l'interrupteur de contact 2 cette tension est supérieure à un seuil donné. Il ne commande la fermeture de l'interrupteur T que lorsque ladite tension est redevenue inférieure audit seuil.

Le fonctionnement de ce montage est le suivant.

A la fermeture de l'interrupteur 2, le microprocesseur 3 est mis sous tension.

Sa sortie "s1" permet la charge du condensateur C à travers la résistance R1 durant toute la durée de l'alimentation du moteur M.

A l'ouverture de l'interrupteur 2, le microprocesseur 3 n'étant plus alimenté, le condensateur C ne se charge plus.

Il se décharge alors dans les résistances en série R1 et R2.

Du fait de la présence de R2 dans le circuit de décharge, la constante de temps de décharge est supérieure à la constante de temps de la charge.

On choisit préférentiellement un rapport entre les constantes de temps de charge et de décharge sensiblement égal au rapport entre les constantes de temps d'échauffement et de refroidissement du démarreur, ce qui permet d'avoir à tout instant, par la mesure de la tension aux bornes du condensateur, une bonne représentation de l'état d'échauffement du démarreur.

Cette tension est analysée en permanence par le microprocesseur sur son entrée analogique "e1".

Les évolutions de la tension du condensateur C en fonction du temps sont représentées à titre d'exemple sur la figure 2a.

Chaque fois que l'interrupteur 2 est fermé (la figure 2b illustre sa séquence d'ouverture et de fermeture), le condensateur C se charge pendant le fonctionnement du démarreur. La décharge se produit lorsque l'interrupteur 2 est ouvert, c'est à dire pendant la période d'arrêt du démarreur.

Si les démarrages sont suffisamment rapprochés, la tension aux bornes du condensateur C augmente progressivement comme l'échauffement du démarreur.

Lorsque cette tension dépasse un seuil prédéterminé correspondant à un état d'échauffement inférieur à la limite thermique admissible, le microprocesseur 3 bloque le transistor de commande du contacteur, ce qui stoppe l'alimentation de puissance du démarreur et évite ainsi toute détérioration irréversible d'origine thermique. C'est ce qu'illustre la figure 2c, sur laquelle on a représenté une séquence de commande du contacteur 1.

Le redémarrage ne peut se faire que lorsque la tension est redescendue au-dessous du seuil de coupure d'une valeur comprise entre 0 et 100% de ce seuil.

D'autres variantes de réalisation que celle qui vient d'être décrite sont bien entendu envisageables.

Notamment, au lieu d'être alimenté par le microprocesseur 3, le circuit RC peut être alimenté par la clé de contact, par exemple par l'intermédiaire d'un circuit régulateur de tension.

Egalement, au lieu d'injecter la tension aux bornes du condensateur C sur une entrée du microprocesseur 3, il est possible de prévoir que le condensateur C est monté aux bornes d'un circuit analogique qui comporte un comparateur à seuil, ainsi qu'éventuellement un amplificateur d'entrée, ce circuit bloquant le transistor T lorsque la tension injectée sur ledit comparateur est supérieure audit seuil.

En variante encore, le seuil de tension au dessus duquel la commande de l'alimentation du moteur M est bloquée peut être variable en fonction d'un ou plusieurs paramètres, notamment en fonction de la température du démarreur, de la température de moteur thermique, de l'intensité absorbée pendant le démarrage, de la vitesse d'entraînement du moteur thermique, de la fréquence des ondulations de tension ou d'intensité due aux passages de compression du moteur thermique ou encore de toute autre information permettant une déduction concernant la vitesse d'échauffement du démarreur.

En outre, la résistance de charge du condensateur peut comprendre des éléments variables en fonction de la température ambiante tels que des résistances CTN.

Par ailleurs, la charge du condensateur C peut se faire en tension hachée ou par trains d'impulsions dont le rapport cyclique est variable afin de moduler la constante de charge en fonctions des caractéristiques d'échauffement présentent au cours du démarrage.

Comme on l'aura compris, un dispositif du type de celui qui vient d'être décrit est un dispositif simple permettant une protection thermique du moteur électrique du démarreur sans nécessiter de placer des capteurs thermiques dans les zones critiques du moteur et sans la connectique indispensable pour relier ces capteurs à la carte électronique de commande du démarreur.

## Revendications

1. Dispositif pour la commande d'un démarreur de véhicule automobile comportant des moyens pour commander l'alimentation du moteur électrique du démarreur en fonction notamment de l'état ouvert ou fermé d'un interrupteur de démarrage (2), ces moyens comportant un circuit (4) de type RC ainsi que des moyens de commande qui empêchent l'alimentation du moteur lorsque la valeur de la tension aux bornes des moyens capacitifs du circuit (4) RC est supérieure à un seuil donné
**caractérisé en ce que**
ce circuit (4) de type RC se charge quand l'interrupteur de démarrage (2) est fermé et se décharge quand l'interrupteur de démarrage (2) est ouvert et ne permet la réalimentation du moteur que lorsque la valeur de la tension aux bornes des moyens capacitifs du circuit (4) RC est devenue inférieure à un deuxième seuil, inférieur au premier, ce circuit (4) de type RC présentant une constante de temps de charge plus petite que sa constante de temps de décharge.

2. Dispositif selon la revendication 1, **caractérisé en ce que** le circuit RC est constitué de deux branches montées en parallèle, l'une qui comprend en série des premiers moyens résistifs (R1) et des moyens capacitifs (C), l'autre qui comprend des seconds moyens résistifs (R2).

3. Dispositif selon l'une des revendications 1 et 2, **caractérisé en ce que** les moyens de commande comportent un microprocesseur (3)qui gère l'alimentation du moteur électrique du démarreur en fonction notamment de l'état fermé ou ouvert de l'interrupteur de démarrage et **en ce que** le circuit RC est alimenté en tension par une sortie (s1) dudit microprocesseur (3).

4. Dispositif selon l'une des revendications 1 et 2, **caractérisé en ce que** le circuit RC est relié à une borne d'alimentation en tension par l'intermédiaire de l'interrupteur de démarrage (2) éventuellement en série avec un circuit régulateur de tension.

5. Dispositif selon l'une des revendications précédentes, **caractérisé en ce que** les moyens de commande comportent un microprocesseur (3) qui gère l'alimentation du moteur électrique du démarreur en fonction notamment de l'état fermé ou ouvert de l'interrupteur de démarrage et **en ce qu'**une tension correspondant à la tension aux bornes des moyens capacitifs du circuit RC est injectée sur une entrée (el) dudit microprocesseur (3), ledit microprocesseur commandant le blocage de l'alimentation du moteur électrique lorsque ladite tension est supérieure à un seuil donné.

6. Dispositif selon l'une des revendications 1 à 4, **caractérisé en ce que** les moyens qui empêchent l'alimentation du moteur lorsque la valeur de la tension aux bornes des moyens capacitifs du circuit RC est supérieure à un seuil donné, comportent un circuit analogique à comparateur à seuil.

7. Dispositif selon l'une des revendications précédentes, **caractérisé en ce que** le rapport entre les constantes de temps de charge et de décharge sensiblement égal au rapport entre les constantes de temps d'échauffement et de refroidissement du démarreur.

8. Dispositif selon l'une des revendications précédentes, **caractérisé en ce que** les moyens qui empêchent l'alimentation du moteur lorsque la valeur de la tension aux bornes des moyens capacitifs du circuit RC est supérieure à un seuil donné, n'autorisent à nouveau l'alimentation du moteur électrique que lorsque ladite tension est redescendue au-dessous d'un deuxième seuil inférieur au premier.

9. Dispositif selon l'une des revendications précédentes, **caractérisé en ce que** le seuil de tension au dessus duquel la commande de l'alimentation du moteur M est bloquée est variable en fonction d'un ou plusieurs paramètres de fonctionnement du démarreur et/ou du moteur thermique.

10. Dispositif selon la revendication 2, **caractérisé en ce que** les moyens résistifs en série avec les moyens capacitifs du circuit sont variables en fonction de la température.

## Patentansprüche

1. Vorrichtung zur Steuerung eines Kraftfahrzeuganlassers mit Mitteln zum Steuern der Stromversorgung des Elektromotors des Anlassers insbesondere in Abhängigkeit vom geöffneten oder geschlossenen Zustand eines Anlassschalters (2), wobei diese Mittel eine RC-Schaltung (4) sowie Steuermittel umfassen, die die Stromversorgung des Motors verhindern, wenn der Wert der Klemmenspannung der kapazitiven Mittel der RC-Schaltung (4) größer als ein gegebener Schwellenwert ist,
**dadurch gekennzeichnet, dass** sich diese RC-Schaltung (4) auflädt, wenn der Anlassschalter (2) geschlossen ist, und sich entlädt, wenn der Anlassschalter (2) geöffnet ist, und die erneute Stromversorgung des Motors erst dann ermöglicht, wenn der Wert der Klemmenspannung der kapazitiven Mittel der RC-Schaltung (4) kleiner als ein zweiter, unter dem ersten liegender Schwellenwert geworden ist, wobei diese RC-Schaltung (4) eine Ladezeitkonstante aufweist, die kleiner als ihre Entladezeitkonstante ist.

2. Vorrichtung nach Anspruch 1, **dadurch gekennzeichnet, dass** die RC-Schaltung aus zwei parallel geschalteten Strängen besteht, von denen einer in Reihenschaltung erste ohmsche Mittel (R1) und kapazitive Mittel umfasst, während der andere zweite ohmsche Mittel (R2) umfasst.

3. Vorrichtung nach einem der Ansprüche 1 und 2, **dadurch gekennzeichnet, dass** die Steuermittel einen Mikroprozessor (3) umfassen, der die Stromversorgung des Elektromotors des Anlassers insbesondere in Abhängigkeit vom geöffneten oder geschlossenen Zustand des Anlassschalters regelt, und dass die RC-Schaltung durch einen Ausgang (s1) des besagten Mikroprozessors (3) mit Spannung versorgt wird.

4. Vorrichtung nach einem der Ansprüche 1 und 2, **dadurch gekennzeichnet, dass** die RC-Schaltung mit einer Spannungsversorgungsklemme über den Anlassschalter (2) gegebenenfalls in Reihenschaltung mit einer Spannungsreglerschaltung verbunden ist.

5. Vorrichtung nach einem der vorangehenden Ansprüche, **dadurch gekennzeichnet, dass** die Steuermittel einen Mikroprozessor (3) umfassen, der die Stromversorgung des Elektromotors des Anlassers insbesondere in Abhängigkeit vom geschlossenen oder geöffneten Zustand des Anlassschalters regelt, und dass eine Spannung entsprechend der Klemmenspannung der kapazitiven Mittel der RC-Schaltung an einem Eingang (e1) des besagten Mikroprozessors (3) eingespeist wird, wobei der besagte Mikroprozessor die Sperrung der Stromversorgung des Elektromotors ansteuert, wenn die besagte Spannung größer als ein gegebener Schwellenwert ist.

6. Vorrichtung nach einem der Ansprüche 1 bis 4, **dadurch gekennzeichnet, dass** die Mittel, welche die Stromversorgung des Motors verhindern, wenn der Wert der Klemmenspannung der kapazitiven Mittel der RC-Schaltung größer als ein gegebener Schwellenwert ist, eine Analogschaltung mit Schwellenwertvergleicher umfassen.

7. Vorrichtung nach einem der vorangehenden Ansprüche, **dadurch gekennzeichnet, dass** das Verhältnis zwischen den Lade- und Entladezeitkonstanten in etwa gleich dem Verhältnis zwischen den Erhitzungs- und Abkühlungszeitkonstanten des Anlassers ist.

8. Vorrichtung nach einem der vorangehenden Ansprüche, **dadurch gekennzeichnet, dass** die Mittel, welche die Stromversorgung des Motors verhindern, wenn der Wert der Klemmenspannung der kapazitiven Mittel der RC-Schaltung größer als ein gegebener Schwellenwert ist, die Stromversorgung des Elektromotors erneut erst dann erlauben, wenn die besagte Spannung wieder unterhalb eines zweiten Schwellenwerts abgesunken ist, der niedriger als der erste Schwellenwert ist.

9. Vorrichtung nach einem der vorangehenden Ansprüche, **dadurch gekennzeichnet, dass** der Spannungsschwellenwert, bei dessen Überschreitung die Steuerung der Stromversorgung des Motors M gesperrt wird, in Abhängigkeit von einem oder mehreren Betriebsparametern des Anlassers und/oder des Verbrennungsmotors veränderlich ist.

10. Vorrichtung nach Anspruch 2, **dadurch gekennzeichnet, dass** die mit den kapazitiven Mitteln der Schaltung in Reihe geschalteten ohmschen Mittel in Abhängigkeit von der Temperatur veränderlich sind.

## Claims

1. A controller for a vehicle starter motor, the controller comprising means for applying power to the electric starter motor as a function in particular of the open or closed state of a starter switch (2), said means including an RC type circuit (4) and control means for preventing power being applied to the starter motor when the voltage across the terminals of the capacitor means of the RC circuit (4) exceeds a given threshold, the controller being **characterized in that** the RC type circuit (4) charges when the starter switch (2) is closed and discharges once the starter switch (2) is open, and enables power to be reapplied to the motor only when the voltage across the terminals of the capacitor means of the RC circuit (4) has become less than a second threshold, that is less than the first, the RC type circuit (4) having a charging time constant that is shorter than its discharging time constant.

2. A controller according to claim 1, **characterized in that** the RC circuit is constituted by two parallel-connected branches, one comprising a series connection of first resistor means (R1) and the capacitor means (C), the other comprising second resistor means (R2).

3. A controller according to claim 1 or 2, **characterized in that** the control means comprise a microprocessor (3) which controls the application of power to the electric starter motor as a function in particular of the closed or open state of the starter switch, and **in that** the RC circuit is fed with voltage via an output (s1) of said microprocessor (3).

4. A controller according to claim 1 or 2, **characterized in that** the RC circuit is connected to a voltage supply terminal via the starter switch (2), optionally in series with a voltage regulator circuit.

5. A controller according to any preceding claim, **characterized in that** the control means comprise a microprocessor (3) controlling the supply of power to the electric starter motor as a function in particular of the dosed or open state of the starter switch, and **in that** a voltage corresponding to the voltage across the terminals of the capacitor means of the RC circuit is injected into an input (e1) of said microprocessor (3), said microprocessor causing the supply of power to the starter motor to be blocked when said voltage exceeds a given threshold.

6. A controller according to any one of claims 1 to 4, **characterized in that** the means which prevent power being applied to the starter motor when the voltage across the terminals of the capacitor means of the RC circuit exceeds a given threshold include an analog threshold comparator circuit.

7. A controller according to any preceding claim, **characterized in that** the ratio between the charging time constant and the discharging time constant is substantially equal to the ratio between the heating time constant and the cooling time constant of the starter motor.

8. A controller according to any preceding claim, **characterized in that** the means which prevent power being applied to the starter motor when the voltage across the terminals of the capacitor means of the RC circuit exceeds a given threshold prevent power being reapplied to the starter motor until said voltage has dropped below a second threshold lower than the first.

9. A controller according to any preceding claim, **characterized in that** the voltage threshold above which the supply of power to the starter motor is prevented varies as a function of one or more operating parameters of the starter motor and/or of the engine.

10. A controller according to claim 2, **characterized in that** the resistor means in series with the capacitor means of the RC circuit are of resistance that varies as a function of temperature.
